# EUROPEAN PATENT APPLICATION

(11) **EP 1 895 309 A1**
(43) Date of publication of application: **05.03.2008**
(21) Application number: 07016195.5
(22) Date of filing: 17.08.2007
(51) Int. Cl.: G01N 35/10, G01N 35/02

(54) **Automatic analyzer**

(30) Priority: 31.08.2006 JP 2006235816
(71) Applicant: Hitachi High-Technologies Corporation, Tokyo 105-8717 (JP)
(72) Inventor: Arima, Norikazu, Hitachinaka-shi Ibaraki 312-8504 (JP); Ishizawa, Masato, Hitachinaka-shi Ibaraki 312-8504 (JP)
(74) Representative: Strehl Schübel-Hopf & Partner

(57) **Abstract**

Provided is an automatic analyzer, which is further improved in the precision on the prevention of a cross contamination. While a sample dispensing probe washing mechanism 81, a reagent dispensing probe washing mechanism 82 and an agitation mechanism washing mechanism 83 are being individually controlled to act, a washing liquid discharge quantity to dispensing probes 42 and 52 and a reserved quantity of the washing liquid in a washing bath are acquired on the basis of detection signals fed from corresponding liquid flow detectors 111, 112, 113, 114, 115 and 116 and liquid level detectors 121 and 122. The washing liquid discharge quantity and the reserved liquid quantity thus acquired are compared with predetermined reference values thereby monitoring whether or not the feed of the washing liquid to the dispensing probes 42 and 52 and the reservation and discharge of the washing liquid in the washing bath are abnormal. An anomaly is reported, if discriminated, by a printer 108 or a CRT 106.

## Description

### BACKGROUND OF THE INVENTION

### 1. Field of the Invention

The present invention relates to an automatic analyzer for analyzing the reactions of samples and reagents individually dispensed in reaction containers. More particularly, the invention relates to an automatic analyzer using members such as reaction containers repeatedly for the analysis reactions.

### 2. Description of the Related Art

Conventionally, this type of automatic analyzer includes disc mechanisms including dispensing probes for dispensing liquids such as samples or reagents from their reservoirs into reaction containers, and agitation mechanisms including agitators for agitating the samples and the reagents individually dispensed into the reaction containers. The automatic analyzer also includes washing mechanisms for washing such members, e.g., reaction containers,'dispensing probes of the dispensing mechanisms or the agitators of the agitation mechanisms for use in a new analyzing reaction as are repeatedly used for every analysis reaction.

These washing mechanisms are provided for preventing the cross contamination, in which the previously analyzed samples, the reagents and the reaction production components are mixed by the repeated uses with the sample components and the reagent components to be newly analyzed, so that the unintended reactions are caused to exert adverse affects on the measured values of the analysis items. For the use in new analysis reactions, therefore, the washing mechanisms wash the necessary portions of such components, e.g., the inner faces of the reaction containers, the outer faces and inner faces of the dispensing probes or the outer faces of the agitators, as are repeatedly used for every analysis reaction.

According to this construction of the washing mechanism, the washing liquid is discharged in a constant quantity according to the portions to be washed, to the portions such as the inner faces of those reaction containers, the outer faces and the inner faces of the dispensing probes and the outer faces of the agitators, and such liquids, e.g., the samples, reagents and reaction production components having stuck in the previous analyzing reactions as will trouble the new analyzing reactions are washed away with that washing liquid.

Thus, in the past, each time the reaction containers, the dispensing probes of the disc mechanisms and the agitators of the agitation mechanisms are used for one analyzing reaction, the control devices of the automatic analyzer control and actuate the individual washing mechanisms before those individual units are used for another analysis reaction, so that a washing liquid may be fed in a predetermined quantity necessary for predetermined proper washes of those individual portions. (See JP-A-6-213907 and JP-A-2001-337095)

### SUMMARY OF THE INVENTION

However, in the automatic analyzer of the aforementioned related art, it has been neither detected nor measured whether or not the individual washing mechanisms are normally acting and whether or not the liquids are being actually discharged in proper quantities, when the reaction containers, the dispensing probes of the disc mechanisms and the agitators of the agitation mechanisms are being washed.

Therefore, in the automatic analyzer of the related art, it is confirmed either directly visually or by monitoring the taken images of video recording means such as a video camera disposed near the automatic analyzer that the individual washing mechanisms for the reaction containers, the dispensing probes of the disc mechanisms and the agitators of the agitation mechanisms are normally acting to discharge the liquids actually in proper quantities, when the washing mechanisms are washing them.

Moreover, it is neither detected nor measured at each analysis reaction whether or not the individual washing mechanisms are normally acting and whether or not the liquids are discharged in proper quantities. Therefore, in the case where the analysis results by the automatic analyzer are abnormal, it is difficult to discriminate which of the washing mechanisms has caused the abnormal analysis results by its deterioration or anomaly.

An object of the invention is to provide an automatic analyzer, which is enabled, by detecting that the washing liquids are actually discharged properly from individual washing mechanisms to such washing targets, e.g., reaction containers, dispensing probes of disc mechanisms and agitators of agitation mechanisms as are repeatedly used for every analyzing reaction, to detect whether or not the individual washing mechanisms have normally acted to wash the washing targets properly.

In order to solve the aforementioned problems, the invention is characterized in that the washing mechanisms for the members to be repeatedly used at every analyzing reaction, such as the reaction containers, the dispensing probes of the disc mechanisms and the agitators of the agitation mechanisms are each provided with detectors for detecting, at the washing action time, whether or not the washing liquid is normally discharged to the washing target and whether or not the discharge quantity of the washing liquid is proper.

According to the invention, it is possible to decide whether or not the washing mechanisms of the members of the automatic analyzer such as the reaction containers, the dispensing probes of the disc mechanisms and the agitators of the agitation mechanisms to be repeatedly used for every analyzing reaction are normally acting thereby discharging the liquid in a proper quantity. It is, therefore, possible to prevent the occurrence of anomaly of the analysis results, which might be based on the washing failure of any of the members to be washed at every analyzing reaction: Even in the case where the anomaly occurs in the analysis results, it is possible to discriminate whether or not the anomaly is caused by the deterioration or failure of any of the washing mechanisms.

### BRIEF DESCRIPTION OF THE DRAWINGS

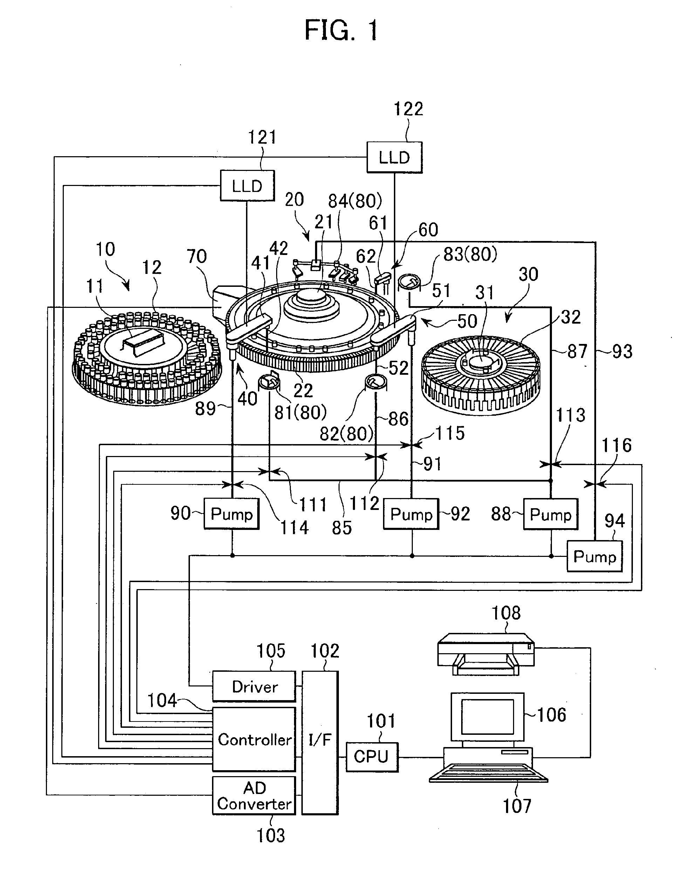

Fig. 1 is a schematic diagram of an automatic analyzer according to an embodiment of the invention.

### DETAILED DESCRIPTION OF THE PREFERRED EMBODIMENTS

A configuration of an automatic analyzer according to an embodiment of the invention will be described with reference to the accompanying drawing. For this description, components like those of the related art are omitted from the drawing, or their detailed descriptions are omitted.

Fig. 1 is a configuration diagram of the automatic analyzer according to an embodiment of the invention.

The automatic analyzer 1 of this embodiment includes a sample disc mechanism 10, a reaction disc mechanism 20, a reagent disc mechanism 30, a sample dispensing mechanism 40, a reagent dispensing mechanism 50, an agitation mechanism 60, an analyzing reaction detector 70, a washing mechanism 80, and the like. In the automatic analyzer 1 of this embodiment, the washing mechanism 80 is composed of various washing mechanisms such as a sample dispensing probe washing mechanism 81, a reagent dispensing probe washing mechanism 82, an agitation mechanism washing mechanism 83 and a reaction container washing mechanism 84.

The sample disc mechanism 10 includes a sample disc 11, which is rotationally driven in a desired clockwise or counterclockwise direction by the sample disc rotation drive mechanism (not shown in Fig. 1). On this sample disc 11, there are arrayed a plurality of sample containers 12, in which samples (sample liquids) are reserved. Each of the sample containers 12 is removably loaded into the sample disc 11. The rotations of the sample disc 11 are performed by controlling the drive of the sample disc rotation drive mechanism (not shown in Fig. 1) through an interface 102 by a CPU 101 acting as control means for controlling the actions of the automatic analyzer 1 as a whole. The samples, as reserved by the individual sample containers 12 on the sample disc 11, are extracted from the sample containers 12 by the sample dispensing mechanism 40 in accordance with sequences registered in advance.

The reaction disc mechanism 20 includes a reaction disc 21, which is rotationally driven in a desired direction by the reaction disc rotation drive mechanism (not shown in Fig. 1). On this reaction disc 21, there are arrayed a plurality of reaction containers 22, into which samples and reagents are individually dispensed. Each of the reaction containers 22 is removably loaded into the reaction disc 21. The rotations of the reaction disc 21 are performed, as in the case of the sample disc 11, by controlling the drive of the reaction disc rotation drive mechanism (not shown in Fig. 1) through the interface 102 by the CPU 101.

The reagent disc mechanism 30 includes a reagent disc 31, which is rotationally driven in a desired clockwise or counterclockwise direction by the reagent disc rotation drive mechanism (not shown in Fig. 1). On this reagent disc 31, there are arrayed a plurality of reagent containers 32, in which reagents (reagent liquids) are reserved. Each of the reagent containers 32 is removably loaded into the reagent disc 31. The rotations of the reagent disc 31 are performed by controlling the drive of the reagent disc rotation drive mechanism (not shown in Fig. 1) through an interface 102 by the CPU 101 acting as control means for controlling the actions of the automatic analyzer 1 as a whole. The reagents, as reserved by the individual reagent containers 32 on the reagent disc 31, are extracted from the reagent containers 32 by the reagent dispensing mechanism 50 in accordance with sequences registered in advance.

The sample dispensing mechanism 40 and the reagent dispensing mechanism 50 are provided with arms 41 and 51, respectively, which can move up and down and can turn with respect to the platform (not shown in Fig. 1), so that dispensing probes 42 and 52 disposed at their rocking ends can move up and down and can turn.

The sample dispensing mechanism 40 is so constructed that the rocking end of its arm 41 is turned, under the control of the aforementioned CPU 101, to and positioned at a predetermined position over the sample disc 11 having the plural sample containers 12 arrayed therein, to lower the sample dispensing probe 42 thereby immersing the leading end opening of the probe in the sample in the sample container 12. Then, the dispensing pump (not shown in Fig. 1) is controlled to be driven to suck and hold the sample in the dispensing probe 42.

Moreover, the sample dispensing mechanism 40 is so constructed that the rocking end of its arm 41 in the state holding the sample in the dispensing probe 42 is also turned, under the control of the aforementioned CPU 101, to and positioned at a predetermined position over the reaction disc 21 having the plural reaction containers 22 arrayed therein, to lower the sample dispensing probe 42 thereby bringing the leading end opening of the probe in a predetermined reaction container 22. In this state, the dispensing pump (not shown in Fig. 1) is controlled to be driven to discharge the sample sucked and held in the dispensing probe 42, into the inside of the reaction container 22.

In short, the sample dispensing mechanism 40 is constructed to transfer one sample reserved in the predetermined sample containers 12 of the sample disc mechanism 10, to the predetermined reaction container 22 of the reaction disc mechanism 20, as described hereinbefore.

As in the case of the sample dispensing mechanism 40, the reagent dispensing mechanism 50 is also constructed to control to drive both the arm 51 equipped with the reagent dispensing probe 52 and the dispensing pump (not shown in Fig. 1), so that one reagent reserved in the predetermined reaction container 32 of the reagent disc mechanism 30 is transferred to the predetermined reaction container 22 of the reaction disc mechanism 20.

After the sample dispensation to the reaction container 22, moreover, the sample dispensing mechanism 40 is constructed to turn and position the arm 41 to a predetermined washing position for a next new sample dispensation, so that the sample dispensing probe 42 immersed in the sample is washed by the sample dispensing probe washing mechanism 81.

After the reagent dispensation to the reaction container 22, the reagent dispensing mechanism 50 is also constructed to turn and position the arm 51 to a predetermined washing position for a next new reagent dispensation, so that the reagent dispensing probe 52 immersed in the reagent is washed by the reagent dispensing probe washing mechanism 82.

The reaction disc mechanism 20 turns and positions each of a plurality of the reaction containers 22 which are arrayed on the reaction disc 21, in accordance with the rotational displacement of its reaction disc 21, with respect to the sample dispensing mechanism 40, the reagent dispensing mechanism 50, the agitation mechanism 60, the analyzing reaction detector 70 and the reaction container washing mechanism 84, which are arranged along the circumferential direction of the disc 21.

The reaction containers 22, in which the reagents dispensed by the reagent dispensing mechanism 50 are added to the samples dispensed by the aforementioned sample dispensing mechanism 40, are rotationally positioned, by the rotations of the reaction disc 21, at the arranged position of the agitation mechanism 60 in the circumferential direction of the reaction disc 21. Then, the samples and the reagents, which are individually dispensed into the reaction containers 22, are agitated by the agitation mechanism 60.

The agitation mechanism 60 includes an arm 61, which can move up and down and rotate with respect to the platform (not shown in Fig. 1), and is equipped with a rotationally driven agitator 62 at its rocking end.

The agitation mechanism 60 is so constructed under the control of the CPU 101 as to insert its agitator 62 into the liquid in the reaction container 22, into which the sample and the reagent rotationally positioned have been dispensed, and as to rotate the same thereby agitating the sample, to which the reagent has been added.

The agitation mechanism 60 is so constructed as to retract the agitator 62, after the liquid in one reaction container 22 was agitated, from the inside of the reaction container 22, as prepared for the liquid of the next new reaction container 22, and as to position the arm 61 rotationally at the predetermined washing position, so that the agitator 62, to which a reactive liquid (i.e., a reaction product component) has stuck, is washed by the agitation mechanism washing mechanism 83.

The reaction container 22, which has been agitated by the agitation mechanism 60 so that the reactive liquid is reserved therein, is rotationally positioned, by the rotation of the reaction disc 21, at the arranged position of the analyzing reaction detector 70 around that disc 21. Then, the reaction product component in each of the reaction container 22 is detected by the analyzing reaction detector 70.

The analyzing reaction detector 70 is composed of a multi-wavelength photometer for detecting the absorbance of the reactive liquid in the reaction container 22. This multi-wavelength photometer 116 is made to receive a luminous flux, which has been produced by the light source (not shown in Fig. 1) and transmitted through the reactive liquid in the reaction container 22.

The absorbance signals, which have been detected by the multi-wavelength photometer as the analyzing reaction detector 70, of the individual reaction containers 22 are fed through an A/D converter 103 and the interface 102 to the CPU 101 so that they are transformed into analysis item concentrations of the measurement targets in the sample. The analysis item concentrations thus converted by the CPU 101 of the measurement targets in the sample are outputted either as prints from a printer 108 or as displays on the screen of a display device 106 such as a CRT. On this measurement target of the analysis item concentrations in the sample, the operator can input it in advance from a keyboard 107 what analysis item is to be measured, and can store that analysis item in the CPU 101. This CPU 101 controls the multi-wavelength as the analyzing reaction detector 70 so that the analysis item requested may be measured.

The reaction container 22, which has been analyzed on the reactive liquid (i.e., the reaction product component) by the analyzing reaction detector 70, is rotationally positioned at the arranged position of the reaction container washing mechanism 84 around the reaction disc 21 by the rotation of the disc 21. Then, the reaction container 22, in which the reactive liquid is reserved, is washed by the reaction container washing mechanism 84.

Here are described the individual embodiments of the sample dispensing probe washing mechanism 81, the reagent dispensing probe washing mechanism 82, the agitation mechanism washing mechanism 83 and the reaction container washing mechanism 84 thus far described of the automatic analyzer 1.

The sample dispensing probe washing mechanism 83 and the reagent dispensing probe washing mechanism 82 are made to have similar constructions, and are provided with washing baths for washing the outer faces of the dispensing probes 42 and 52, respectively. These washing baths are made to communicate with a washing liquid supply source through a liquid supply valve and with a liquid drainage through a liquid discharge valve.

By closing the liquid discharge valve and opening the liquid supply valve, the washing liquid sufficient for immersing the outer faces of the dispensing probes 42 and 52 is supplied to and reserved in the washing baths. The washing liquid thus having residing in the washing baths is discharged, after the dispensing probes 42 and 52 have been immersed and washed, from the washing baths to the liquid drainage by opening the liquid discharge valve.

Thus, the outer faces of the dispensing probes 42 and 52 are washed by arranging them in the washing baths, by opening and closing the liquid supply valve and the liquid discharge valve, and by repeating the residence and discharge of the washing liquid in and from the washing baths.

On the other hand, the insides of the dispensing probes 42 and 52, in which the samples and the reagents sucked to be dispensed are held, can be selectively changed in their communications with the dispensing pumps and the washing liquid supply source through a change-over mechanism such as a change-over valve.

The dispensing probes 42 and 52 are washed, while their insides being selectively communicating with the washing liquid supply source, by the washing liquid supplied from the washing liquid supply source and discharged from the probe openings.

The agitation mechanism washing mechanism 83 is made to have a construction like that for washing the outer faces of the dispensing probes 42 and 52, which are provided with the washing baths in the sample dispensing probe washing bath 81 and the reagent dispensing probe washing mechanism 82.

Unlike these washing mechanisms 81, 82 and 83, the reaction container washing mechanism 84 has a plurality of nozzles including a reactive liquid discharge nozzle, a washing liquid supply nozzle, and a washing liquid discharge nozzle. The reactive liquid discharge nozzle communicates with a reactive liquid suction/discharge mechanism for sucking and discharging the reactive liquid in the reaction container 22. The washing liquid supply nozzle communicates with the reactive liquid supply source for supplying the reactive liquid to the inside of the reaction container 22, to which the reactive liquid has been discharged. The washing liquid discharge nozzle communicates with a reactive liquid suction/discharge mechanism for sucking and discharging the reactive liquid reserved in the reaction container 22.

The reaction container washing mechanism 84 is constructed to wash the inside of the reaction container 7, by using these plurality of nozzles, by repeating the discharging/sucking operations of the reactive liquid to suck and discharge the reactive liquid into and out of the reaction container 22 and then to reserve and discharge the reactive liquid in and from the reaction container 22.

In Fig. 1 are shown washing liquid feeding passages 85, 86 and 87 for feeding the washing liquid to the individual washing baths of the sample dispensing probe washing mechanism 81, the reagent dispensing probe washing mechanism 82 and the agitation mechanism washing mechanism 83, and a washing liquid feeding pump 88 acting as a washing liquid supply source common to those passages. Further, Fig. 1 shows a washing liquid feeding passage 89 for feeding the washing liquid to the sample dispensing probe 42 of the sample dispensing mechanism 40, and a washing liquid feeding pump 90 acting as a washing liquid supply source for the feeding passage. Fig. 1 also includes a washing liquid feeding passage 91 for feeding the washing liquid to the reagent dispensing probe 52 of the reagent dispensing mechanism 50, and a washing liquid feeding pump 92 acting as a washing liquid supply source for the feeding passage. Moreover Fig. 1 includes a washing liquid feeding passage 93 for feeding the washing liquid to the washing liquid feeding nozzle of the reaction container washing mechanism 84, and a washing liquid feeding pump 94 acting as a washing liquid supply source for the feeding passage. However, Fig. 1 omits the mechanism constructions of the sample dispensing probe washing mechanism 81, the reagent dispensing probe washing mechanism 82 and the agitation mechanism washing mechanism 83 other than the aforementioned ones.

Moreover, the individual controlled portions of not only the washing liquid feeding pumps 88, 90, 92 and 94 but also the sample dispensing probe washing mechanism 81, the reagent dispensing probe washing mechanism 82 and the agitation mechanism washing mechanism 83 are controlled and driven by the CPU 101 and a driver 105 through the interface 102.

The automatic analyzer 1 according to the present embodiment detects whether or not those sample dispensing probe washing mechanism 81, reagent dispensing probe washing mechanism 82 and agitation mechanism washing mechanism 83 act individually normally and whether or not the washing liquid is discharged in the proper quantity. For these purposes, the washing liquid feeding passages 85, 86, 87, 89, 91 and 93 are provided with liquid flow detectors 111, 112, 113, 114, 115 and 116 for detecting the pressure changes (the pressure fluctuations) of the washing liquids in the individual passages. Moreover, a liquid level detector 121 is provided for either the sample dispensing probe 42 of the sample dispensing mechanism 40, the outer face of which is washed with the washing liquid reserved in the washing bath of the sample dispensing probe washing mechanism 81, or for a washing bath thereof. A liquid level detector 122 is provided for either the reagent dispensing probe 52 of the reagent dispensing mechanism 50, the outer face of which is washed with the washing liquid reserved in the washing bath of the reagent dispensing probe washing mechanism 82, or for a washing bath thereof. The liquid level detectors 122 and 123 are used to detect that the outer faces, which are immersed in the sample or the reagent, of the dispensing probes 42 and 52 are in the washing liquid. These liquid level detectors 121 and 122 are exemplified by liquid level detecting sensors, which make use of electric characteristics such as electrostatic capacity characteristics or ultrasonic transmission characteristics so that their output signals change in magnitudes in response to the presence or absence of the interposition of the washing liquid.

The individual detection signals of those liquid flow detectors 111, 112, 113, 114, 115 and 116 and the liquid level detectors 121 and 122 are fed through a controller 104 and the interface 102 to the CPU 101 so that they are transformed into washing liquid discharge quantities and washing bath liquid quantities during the washing actions.

The CPU 101 acquires, during the individual controlled actions of the sample dispensing probe washing mechanism 81, the reagent dispensing probe washing mechanism 82 and the agitation mechanism washing mechanism 83, the washing liquid discharge quantities (the washing liquid feed quantities) to the dispensing probes 42 and 52 or the reserved quantity of the washing liquid in the washing baths based on the detection signals, which are fed from the corresponding liquid flow detectors 111, 112, 113, 114, 115 and 116 and liquid level detectors 121 and 122.

The CPU 101 compares those washing liquid discharge quantities and reserved liquid quantities thus acquired, with predetermined reference values, thereby monitoring whether or not the feed of the washing liquid to the dispensing probes 42 and 52 and the reservation and discharge of the washing liquid in and from the washing bath are abnormal, that is, whether or not the dispensing probes 42 and 52, the agitator and the reaction container 22 are being normally washed.

In the case where the monitor results in the detection of the CPU 101 that the feed of the washing liquid to the dispensing probes 42 and 52 and the reservation or discharge of the washing liquid in or from the washing baths are abnormal, the automatic analyzer 1 cannot execute the wash of the corresponding portion. The CPU 101 decides that the automatic analyzer 1 cannot perform a precise automatic analysis due to the cross contamination, and creates and outputs either an anomaly occurrence message as prints from the printer 108 or as displays on the screen of the CRT 106. This anomaly occurrence message contains the kinds of the washing mechanisms 81 to 84 having anomalies, and the abnormal situations according to the detectors having detected the abnormal situations.

As a result, the user can grasp that the precise automatic analysis cannot be performed due to the cross contamination, and can specify or estimate the causes for the anomaly occurrence.

Moreover, the CPU 101 can stop, in the case where it discriminates the anomalies of the washing mechanisms 81 to 84, the actions of the individual units such as the sample disc mechanism 10, the reaction disc mechanism 20, the reagent disc mechanism 30, the sample dispensing mechanism 40, the reagent dispensing mechanism 50 and the agitation mechanism 60, if necessary.

In the case where the anomalies of the washing mechanisms 81 to 84 are discriminated, or in the case where the anomalies are excessive or short feed flow rates of the washing liquid, the washing liquid feeding pumps 88, 90, 92 and 94 of the washing mechanisms 81 to 84 discriminated to be abnormal can also be corrected and controlled in the feed flow rates to eliminate the excess or shortage. After the control actions were ended on the washing mechanisms 81 to 84 discriminated on the anomalies, the corresponding similar anomaly targets such as the dispensing probes 42 and 52, the agitator and the reaction container 22 washed can also be repeatedly washed by activating the washing mechanisms 81 to 84.

Moreover, the manners to discriminate the anomalies may be modified by detecting the anomalies for every aforementioned washing actions and by storing the measured values of the liquid flow detectors 111, 112, 113, 114, 115 and 116 and the liquid level detectors 121 and 122 for a predetermined number of actions, so that the changing tendencies of the feeding flow rates of the washing liquid are analyzed from that stored data. When the changing tendencies of easy anomalies are discriminated from the analysis results, the abnormal message may also be created even if no anomaly occurs for every washing actions.

Although the automatic analyzer 1 of this embodiment has been described hereinbefore, the embodiment of the invention should not be limited to the configuration thus far described. For example, the liquid level detectors 121 and 122 for detecting whether or not the reservation and discharge of the washing liquid in the washing baths are abnormal can also be commonly exemplified by the liquid level detecting mechanisms, which are disposed in the dispensing probes 42 and 52 for preventing the dispensing probes 42 and 52 from being immersed in the liquids of the samples or reagents more than necessary for preventing the cross contamination.

## Claims

1. An automatic analyzer comprising:
containers for causing a sample and a reagent to react;
dispensing probes for dispensing the sample and the reagent individually into said containers;
an agitator for agitating the sample and the reagent individually dispensed by said dispensing probe into said container; and
washing mechanisms for washing those individual components individually;
wherein said washing mechanisms include detectors for detecting whether washing liquids are being fed or not, while satisfying a predetermined condition, to a washing target by the corresponding ones of said washing mechanisms.

2. The automatic analyzer as claimed in claim 1, wherein, the detectors detect whether the washing liquids are being fed or not, while satisfying the predetermined condition, to the washing target by said washing mechanisms by measuring pressure fluctuation states of washing liquid feeding passages for feeding the washing liquids to the washing target.

3. The automatic analyzer as claimed in claim 1, wherein, the detectors detect whether the washing liquids are being fed or not, while satisfying the predetermined condition, to the washing target by said washing mechanisms by measuring the fluctuation states of flow velocities or flow rates of washing liquid feeding passages for feeding the washing liquids to the washing target.

4. The automatic analyzer as claimed in claim 1, wherein, the detectors detect whether the washing liquids are being fed or not, while satisfying the predetermined condition, to the washing target by said washing mechanisms by measuring liquid levels or liquid quantities of the fed washing liquids in the washing baths for reserving the washing liquids to immerse the washing targets.

5. The automatic analyzer as claimed in any one of claims 1 to 4, wherein said washing mechanisms are repeatedly actuated for the same one of the washing targets in the case where it is detected by the detector that the washing liquids are not fed, while satisfying the predetermined condition, to the washing targets from the corresponding ones of said washing mechanisms.
